# EUROPEAN PATENT SPECIFICATION

(11) **EP 2 300 129 B1**
(45) Date of publication and mention of the grant of the patent: **05.09.2012**
(21) Application number: 09715173.2
(22) Date of filing: 26.02.2009
(51) Int. Cl.: F02C 6/18, B01D 53/02, F01K 23/10, B01D 53/14

(54) **THERMAL POWER PLANT WITH CO2 SEQUESTRATION**
WÄRMEKRAFTWERK MIT CO2-SEQUESTRIERUNG
CENTRALE ÉLECTRIQUE THERMIQUE AVEC SÉQUESTRATION DU CO2

(30) Priority: 28.02.2008 NO 20081051
(43) Date of publication of application: 30.03.2011
(73) Proprietor: Sargas AS, 0201 Oslo (NO)
(72) Inventor: CHRISTENSEN, Tor, N-3229 Sandefjord (NO); FLEISCHER, Henrik, N-1341 Slependen (NO); BØRSETH, Knut, N-3222 Sandefjord (NO)
(74) Representative: Balle, Morten
(86) International application number: PCT/NO2009/000066
(87) International publication number: WO 2009/108065

(56) References cited:
- WO-A1-2006/107209
- WO-A2-2004/001301
- US-A- 4 899 544
- US-A1- 2007 125 063

## Description

### The field of the invention

The present invention relates to a method and a plant for capturing CO₂ that may be implemented on an existing gas turbine power plant. The invention also relates to a gas turbine power plant including the inventive CO₂ capturing, or CO₂ abatement, plant.

### Background

The last years, or the last decade, the increasing concentration of CO₂ in the atmosphere due to increased combustion of fossil fuel, has caused great concern. The increased greenhouse effect caused by the increasing concentration of CO₂ is expected to cause a substantial temperature increase at the planet earth and an enormous environmental impact in the next few decades.

Actions therefore have to be taken to stabilize the CO₂ concentration in the atmosphere. A substantial part of the man made CO₂ emission is a result of power generation from oil, gas or coal. Accordingly, substantial efforts have been made to develop thermal power plants including capturing of CO₂. Captured CO₂ may be safely deposited into geological formations such as e.g. depleted oil or gas wells, or may be used as pressure support for increasing the production of oil or gas.

The suggestions for CO₂ capture mainly follow three lines of development:
- Post-combustion or "end of pipe" absorption of CO₂ from the exhaust gas from a thermal power plant,
- Pre-combustion conversion of fuel where fossil fuel is converted mainly to hydrogen and CO₂ in reformers. The product from the reformers contains CO₂ at a high partial pressure and this CO2 is therefore relatively easy to separate from the hydrogen that is to be used as fuel, and
- Oxy-fuel systems where oxygen obtained by air separation is used together with CO2, replacing the normal air supply. This eliminates N2 from the system and increases the partial pressure of CO2, facilitating the separation of CO2.

Much effort has been done on post-combustion absorption of CO₂, both due to the fact that this technology is most developed and that the degree of integration with the power plant is small. Post combustion systems may be implemented on existing plants.

The very low partial pressure of CO₂ in the exhaust gas from a thermal power plant is, however, a major problem in making the CO₂ capture economically acceptable. Absorbers become much larger than can be guaranteed with current technology, impeding the absorbent distribution in the absorber column and thus reducing the absorption efficiency. Additionally, the residual O₂ concentration in the exhaust gas of most fossil fuel based thermal power plants is relatively high. This causes degradation problems for the required organic absorbent in the CO₂ capturing system and, depending on the absorbent selectivity, potential contamination of the CO₂ product.

Pre-combustion conversion of fossil fuel to hydrogen is attractive because the reforming products are pressurized with high concentration of CO2. The CO2 is therefore much easier to capture than in post combustion systems. Conventional pressurized absorption columns may be employed. Disadvantages with the process include very complex processes for coal gasification, and the need to develop gas turbines for hydrogen fuel.

Similar to the pre-combustion conversion of fossil fuel, oxy-fuel systems produce relatively high partial pressures of CO2. The CO2 therefore becomes much easier to capture than for post combustion systems. Disadvantages with the system include the need for very large and expensive air separation units, high energy requirement for oxygen production, and the new technologies required to use CO2 instead of nitrogen to cool flame temperatures. New gas turbines are also required when CO2 replaces nitrogen in the motive fluid. Risks of leaks and fire involving pure oxygen from the oxygen production unit will require large spatial separation between the oxygen plant and the power plant. This requirement increases the total area needed and will in particular increase the cost of offshore applications. Furthermore, the produced CO2 will contain unburned oxygen. This oxygen must be separated from the CO2 prior to for example injection in oil fields for enhanced oil recovery.

WO 2004/001301, which is included as reference in the present application, relates to a low CO₂ emission thermal power plant. CO₂ is absorbed from the combustion gas from a combustion chamber in an absorber, wherein a liquid absorbent flows countercurrent to the combustion gas. This enriches the absorbent in CO2. The rich absorbent is regenerated by heating and stripping in a regeneration column by countercurrent flow to steam generated in a reboiler connected to the lower part of the regeneration column, to produce a stream of CO₂ that is exported from the plant for deposition, and regenerated absorbent that is returned to the absorber. The partial pressure of CO₂ is increased and the volume flow of flue gas to be purified is decreased, relative to the power produced, by substantially complete combustion of both oxygen and fuel in a pressurized combustion chamber. This improves the capture of CO₂, which occurs at high pressure. WO 2004/001301 is, however, suitable either for thermal power plants having a pressurised combustion chamber for production of steam, or for new plants.

WO 2005/045316 relates to a purification works for a thermal power plant, where the combustion gas from an existing thermal power plant is used as all, or a substantial part of, the oxygen containing gas that is introduced into a plant built at the basic principle of WO 2004/001301, to capture the CO₂ from both plants and increase the total production of electrical power, at the same time. A highly efficient gas turbine is used as a primary power plant. Air is first compressed in a primary power plant compressor, then heated and expanded to atmospheric pressure. A secondary power plant provides additional power and carries out CO2 capture under pressure. The main shortcoming of this technology is the need to re-compress the gas from the primary unit. Such recompression requires significant work and causes loss of thermal efficiency.

There is, however, need for a system which as far as possible uses the advantages of the highly efficient, high temperature gas turbines in combination with pressurized CO2 capture, without the need to re-compress gas from atmospheric pressure.

An objective is therefore to provide an improved method and plant for capturing CO₂ from a gas turbine. It is also an objective to provide solution that is suitable for post-installation for an existing gas turbine or combined cycle power plant.

### Summary of the invention

According to a first embodiment, the present invention relates a method for separation of CO₂ from the combustion gas of a gas turbine where carbonaceous fuel and compressed oxygen containing gas are combusted, and the combustion gas is expanded over a turbine to produce electrical power in a generator before the expanded combustion gas is released into the atmosphere, the method additionally comprises the steps of:
a) withdrawing the combustion gas at an intermediate stage of the turbine,
b) introducing the withdrawn combustion gas into a burner together with compressed air and additional carbonaceous fuel to cause a secondary combustion therein,
c) cooling the combustion gas from the burner,
d) introducing the cooled combustion gas into a CO₂ capturing unit, to separate the combustion gas into a CO₂ rich gas, that is withdrawn for deposition, and a CO₂ lean gas, and
e) reheating and reintroducing the CO₂ lean gas into the turbine at an intermediate level and further expand the gas before it is released into the atmosphere.

Withdrawing partly expanded gas from an intermediate level of the turbine and introduction of the partly expanded, gas that are still at an elevated pressure, into the burner for a second combustion, allows for a combustion and succeeding CO₂ capture at an elevated pressure. Additionally, the heat and pressure energy of the gas that is withdrawn is at least partly conserved and is used by reheating of the CO₂ lean gas and expanding the same over the turbine,

According to one embodiment, the method additionally comprises the step of cooling the withdrawn combustion gas of step a) before the gas is introduced into the burner in step b). Cooling of the gas before it is introduced into to burner reduces the temperature of the flare in the burner, as the flare otherwise may become too hot and produce high levels of NOx. Additionally high temperatures may result in problems related to the materials of the components of the plant

The secondary combustion in the burner adds mass to the total gas flow to substitute the mass of CO₂ that is removed from the total mass of gas. Performing this combustion and the CO₂ capture downstream of the burner reduces the oxygen level in the gas and increases the CO₂ level, which both are important for the efficiency of the capturing process. Re-heating of the CO₂ depleted gas and expanding the gas over the turbine increases the energy efficiency of the plant considerably.

According to a second aspect, the present invention relates to a plant for generation of power comprising a gas turbine, and a generator operated by the gas turbine, wherein the plant additionally comprises a gas side draw unit for withdrawal of partly expanded gas from an intermediate stage of the turbine, a burner for a secondary combustion of fuel, using the partly expanded gas and additional air as sources for oxygen, one or more heat exchanger(s) for cooling the combustion gas from the secondary combustion, CO₂ separation unit for separation of the cooled combustion gas into a CO₂ rich gas that is treated further and exported from the plant, and a CO₂ lean gas, one or more heat exchanger(s) for reheating the CO₂ lean gas, and gas a gas return line and a turbine inlet unit for introduction of the heated CO₂ lean gas at an intermediate level of the turbine for further expansion.

### Short description of the figures

Figure 1 is a principle sketch of a combined cycle gas powered power plant according to the state of the art,
Figure 2 is a principle sketch of an embodiment of the present invention,
Figure 3 is a graph illustrating the net power output from a power plant according to the invention as a function of gas turbine load relative to total duty,
Figure 4 is a graph illustrating the net electric efficiency from a power plant according to the invention as a function of gas turbine load relative to total duty,
Figure 5 is a graph illustrating the residual oxygen in the exhaust gas to be purified in a power plant according to the invention as a function of gas turbine load relative to total duty,
Figure 6 is a graph illustrating partial pressure of CO₂ in the exhaust gas to be purified in a power plant according to the invention as a function of gas turbine load relative to total duty, and
Figure 7 is a graph illustrating the actual volume of exhaust gas to be purified in a power plant according to the invention as a function of gas turbine load relative to total duty.

### Detailed description of the invention

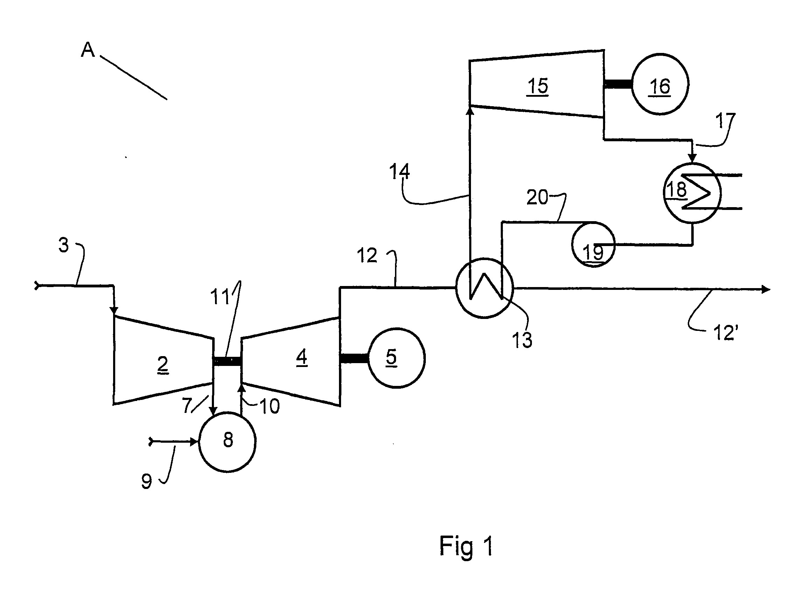

Figure 1 illustrates a combined cycle gas turbine power plant 1 according to prior art. The prior art plant will be discussed as the present invention relates to a method and modification for capturing CO₂ from a power plant based on a combined cycle power plant. The term "gas turbine" is in the present invention used for a unit comprising a compressor 2, a combustion chamber 8 and turbine 4 mechanically connected to the compressor, most preferably connected on a common shaft 11. A "turbine" is used in the meaning of an expansion unit for converting of the energy of high temperature gas to rotational energy.

The terms "carbonaceous fuel" or "fuel" are in the present invention used for fuel suitable for a gas turbine such as natural gas, fluid hydrocarbons and oxygenated hydrocarbons such as methanol, ethanol etc., that will be in gas phase in the combustion chamber of a gas turbine, or gasified fuels such as gasified coal, gasified coke, gasified organic materials etc.

Air is introduced into the compressor 2 through an air inlet line 3. The compressed air from the compressor 2 is introduced into a combustion chamber 8 via a compressed air line 7. Fuel, such as e.g. natural gas, is introduced into the combustion chamber through a gas line 9. Combustion gas from the combustion chamber is led through a combustion gas line 10 and is expanded over a turbine 4 before the expanded gas is released through an exhaust gas line 12.

As indicated in the figure, the compressor 2, turbine 4 and a generator 5 for production of electric power, are arranged on a common shaft 11.

The exhaust gas in the exhaust gas line 12 is still hot, typically from 500 to 600°C, and is cooled by means of one or more heat exchanger(s) 13 to produce steam and cooled exhaust gas that is released into the surroundings through an exhaust outlet 12'.

The steam produced in the heat exchanger(s) 13 is led in a steam line 14 into a steam turbine 15 where the steam is expanded. A generator 16 is connected to the steam turbine for production of electrical power.

The expanded steam is led in an expanded steam line 17, cooled on a cooler 18, suitably against water, to condense the steam. The condensate is pumped by means of a pump 19 trough a water line 20 and is reintroduced into the heat exchanger(s) 13.

Typically, about 75 to 80 % of the electrical power from a combined cycle power plant is generated in the generator 5 operated by the turbine 4 and the rest in generator 16, operated by the steam turbine 15.

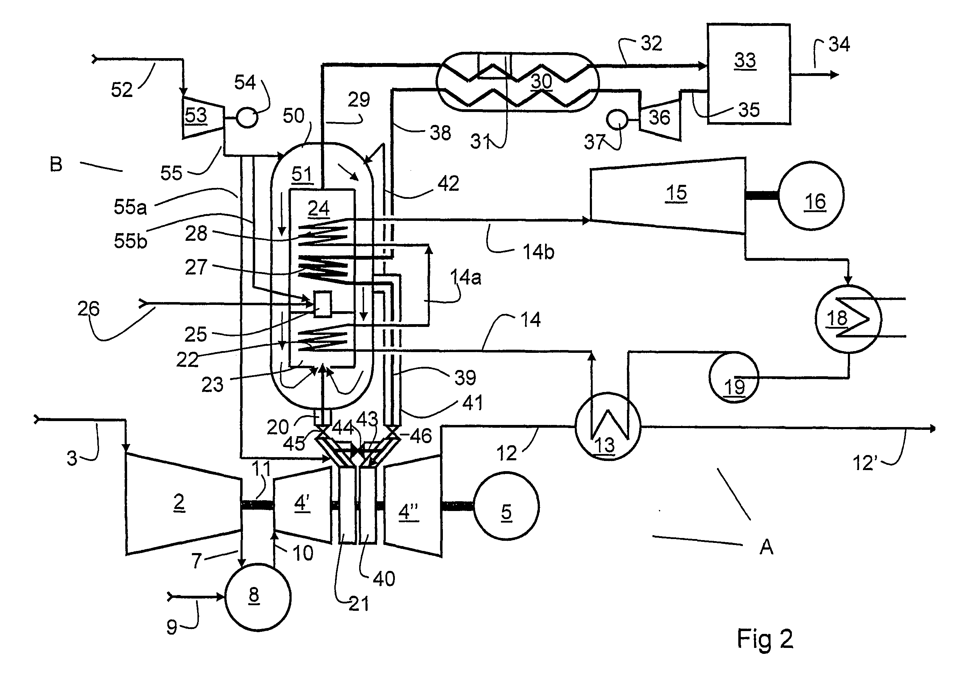

Figure 2 illustrates a plant according to the present invention, comprising a modified combined cycle gas turbine part A and a CO₂ abatement part B.

Parts corresponding to parts described with reference to figure 1 are referred to using the same reference numbers as used for figure 1.

The turbine 4 normally comprises a high pressure turbine 4' and a low pressure turbine 4". According to the present invention, partly expanded combustion gas is withdrawn from the turbine at an intermediate level of expansion, suitably between the high pressure 4' and low pressure 4" turbines, into a gas withdrawal line 20. A gas side draw unit 21 is preferably inserted at the shaft 11, after the high pressure turbine to facilitate the withdrawal of the partly expanded gas. The pressure at the point of gas withdrawal is for example in the range from 6 to 16 bara, such as 10 to 14 bara.

The partly expanded gas in line 20 is combined with pressurized and heated air and introduced into a cooling chamber, where the combined gas is cooled by heating steam and/or generating of steam in a heating tube 22 in a primary cooling chamber 23. The gas mixture entering the cooling chamber has a temperature of about 1000 °C and is cooled therein to a temperature of about 400 to 500 °C. The combined and cooled gas in cooling chamber 23 is then introduced to a secondary cooling chamber 24 through a burner 25 where the combined gas is mixed with fuel gas that is introduced through a secondary fuel line 26. Air enters through an air supply line 52 and is compressed in a compressor 53 operated by means of an electric motor 54.

The compressed air is supplied through lines 55 and 55a and used to protect pipes 20 and 39 and to cool the pressure container 50, before flowing to the secondary burner for firing purposes. Some of the air is supplied through line 55b and routed directly to combustor 25. The total amount of air from compressor 53 is adjusted relative to the captured CO2 withdrawn in line 34, so that the volume flow of gas to the gas turbine through line 39 is the same as, or very close to, the volume flow of gas withdrawn from the gas turbine through line 20. The fuel introduced into the secondary burner is adjusted so that the combustion in the secondary combustion chamber 24 is substantially complete, both with regard to oxygen and fuel.

The combustion gases in the secondary cooling chamber are cooled by heating gas in a gas heating tube 27 and by superheating of steam from the heating tube 22 in a superheater tube 28. Heating tube 22 is connected to superheating tube 28 though a line 14a. The superheated steam in the superheating tube 28 is withdrawn through a line 14 b and introduced into steam turbine 15 to produce electrical energy, condensed and returned to the heat exchanger 13 as described above with reference to figure 1.

Exhaust gas from the secondary cooling chamber 24 is withdrawn through an exhaust line 29 and is cooled in a heat exchange assembly 30. Preferably a SCR (Selective Catalytic Reduction unit) or SNCR (Selective Non-Catalytic Reduction unit) 31 is provided in the heat exchange assembly 30 to remove NOₓ from the exhaust gas.

The cooled gas from the heat exchange assembly 30 is withdrawn through a line 32 and introduced into a CO₂ separation unit 33. The CO₂ separation unit 33 is a standard unit according to the state of the art, e.g. a separation unit as described in WO 00/57990, where CO₂ in the CO₂ containing gas is absorbed by countercurrent flow to a liquid absorbent in an absorber to produce a CO₂ lean stream that is withdrawn through a line 35. The CO₂ loaded absorbent is thereafter regenerated to produce a stream of CO₂ that is dried and compressed and is withdrawn through line 34 for export from the plant, and regenerated absorbent that is returned to the absorber. The absorbent may be any conventionally used absorbent, such as aqueous solutions of amines, amino acids, carbonates etc. The CO₂ capture unit may also include gas scrubbing and a direct contact gas cooler upstream of the CO₂ capture unit.

A pressurized mantle 41 is preferably covering the high pressure and high temperature lines 20, 39. The mantle surrounding lines 20 and 39 is pressurized using air from a branch line 55a dividing from the compressed air line 55. The mantle reduces the pressure difference across the hot inner pipe wall, thus reducing the wall thickness and possibilities for cracks during temperature transients. Heated air from inside the mantle 41 is led from the mantle 41 to the mantle 50 through a line 42.

If necessary, additional air for the combustion in the secondary combustion chamber may be introduced through a second branch line 55b dividing from the compressed air line 55, to deliver additional air to the burner 25. This additional air has higher oxygen content than the air in line 20, and will stabilize the flame in one or more of the burners 25.

The CO₂ lean stream in line 35 is compressed in one or more compressor(s) 36 operated by motor(s) 37, and is thereafter heated in the heat exchange assembly 30 towards the warm gas that is introduced through line 29. The heated CO₂ lean stream leaves the heat exchange assembly through a line 38 leading to the gas heating tube 27, where the gas is heated by the combustion gases from burner 25. The CO₂ lean gas leaves the gas heating tube 27 and is introduced into a gas return line 39 that is connected to a turbine inlet device 40 that is arranged on the shaft 11. The gas introduced to the inlet device 40 is then expanded over the low pressure turbine 4" and released into the exhaust gas line 12 as described with reference to figure 1.

Closing valves 45, 46 on lines 20, 39 respectively, and a shortcut line 43 with a shortcut valve 44, are preferably provided to close line 20 and 39 and to allow the flow from the gas side draw unit 21 to flow directly into the gas inlet device 40 if necessary.

To balance the turbine correctly, the pressure, temperature and flow of the gas leaving the high pressure turbine 4' through line 20 should substantially be the same as the pressure, temperature and flow of the gas entering the low pressure turbine 4". The combustion in the secondary cooling chamber 24 adds temperature to the total gas, and especially to the CO₂ lean stream in line 38, and adds mass to the total gas to at least party compensate for the mass loss due to the removal of CO₂. Additionally, heat is added to the steam cycle making it possible to increase the power production from the plant compared with the exemplary combined cycle plant according to figure 1.

Table 1 illustrates typical temperatures, mass flow and pressure, in addition to produced or consumed power for a typical combined cycle plant producing about 500 MW electrical power according to figure 1.

**Table 1**

| Part No. | Temp. °C | Mass flow, kg/s | Pressure, bara | Produced / consumed electric power, MW |
|---|---|---|---|---|
| 3 | 20 | 869 | 1 | |
| 5 | | | | 390 |
| 9 | | 18.3 | | |
| 10 | 1343 | 887.3 | 30 | |
| 12 | 520 | 887.3 | 1.04 | |
| 12' | 88 | 887.2 | 1 | |
| 14 | 500 | | 165 | |
| 16 | | | | 110 |

Table 2 illustrates typical temperatures, mass flow and pressure, in addition to produced or consumed power for a typical plant with CO₂ capture according to the present invention, based on the combined cycle plant illustrated in table 1.

**Table 2**

| Part No. | Temp. °C | Mass flow, kg/s | Pressure, bara | Produced / consumed electric power, MW |
|---|---|---|---|---|
| 3 | 20 | 869 | 1 | |
| 5 | | | | 390 |
| 9 | | 18.3 | | |
| 10 | 1343 | 887.3 | 30 | |
| 12 | 520 | 834.3 | 1.04 | |
| 12' | 88 | 834.3 | 1 | |
| 14b | 565 | | 165 | |
| 16 | | | | 828 |
| 20 | 1013 | 887.3 | 10 | |
| 26 | | 31 | | |
| 52 | | 51 | | |
| 34 | | 135 | | |
| 39 | 13 | 834.3 | 10 | |
| 37 | | | | -13 |
| 54 | | | | -17 |
| 33 | | | | -84 |

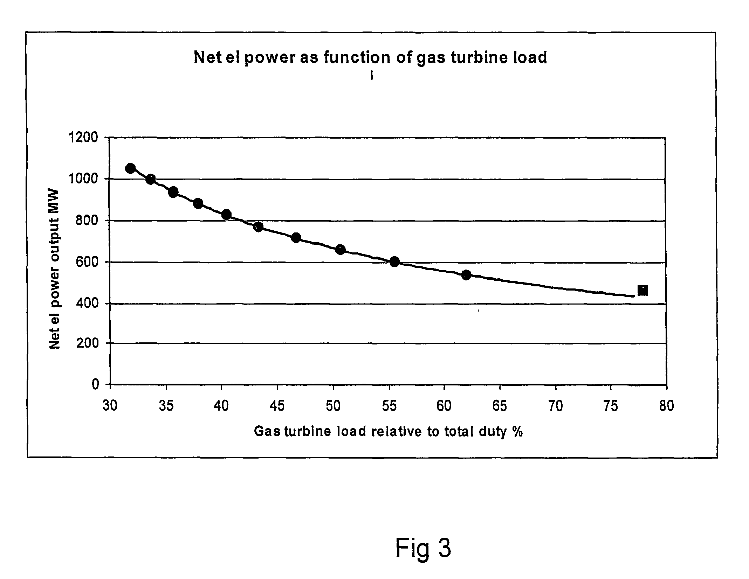

Figures 3 to 7 illustrates a plant according to the present invention as described with reference to figure 2 (filled circles connected with a solid line) and a comparative example according to figure 1 is done with a 78% gas turbine load and a 22 % steam turbine load for a standard combined cycle plant (solid square)

Figure 3 illustrates the net electric power from a plant according to figure 2, as a function of gas turbine load, included CO₂ capture and compression. The figure illustrates that the net electrical power output is reduced as the relative load on the gas turbine increases. The difference between the solid line for the present system including CO₂ capture and the comparative example is the electric output cost for the CO₂ capture. The production of electrical power from the gas turbine is constant, whereas the production from the steam turbine increases. The increased power production improves the lifetime production and economy of the plant.

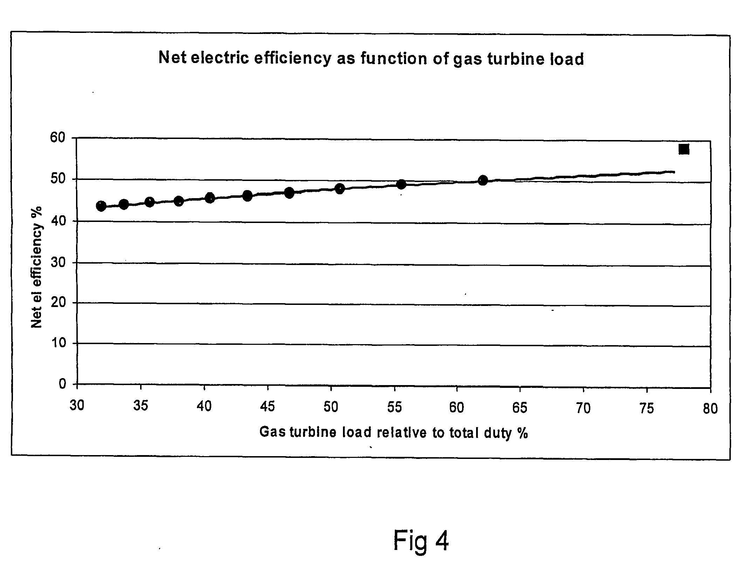

Figure 4 illustrates the net electrical efficiency as a function of the relative loads of the gas turbine and the steam turbine, including CO₂ capture for the plant according to the present invention. The difference between the solid line representing the present invention and the comparative example is the cost for CO₂ capture. The curve also illustrates that net electrical efficiency is reduced as the relative load of the gas turbine is reduced, as the steam turbine part of the process is less efficient than the gas turbine part.

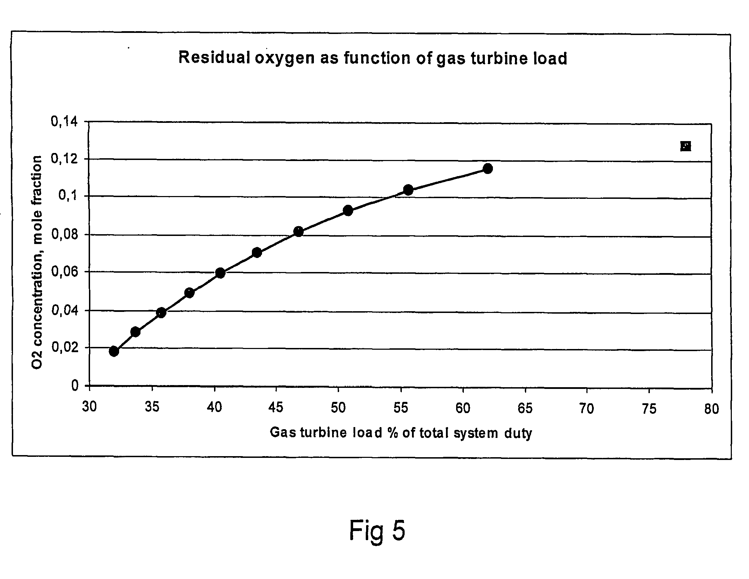

Figure 5 illustrates the effect of the relative load on gas turbine and steam turbine on the residual oxygen content in the exhaust gas, or the gas to be treated by CO₂ capture. The curve clearly illustrates that the oxygen concentration is reduced with increasing steam turbine load. A low O₂ concentration is advantageous for the quality of the captured CO₂. Oxygen present in the gas to be purified will be partly captured and will contaminate the CO₂. CO₂ having a too high concentration of oxygen has to be further purified before deposition, a process that will add cost to the process.

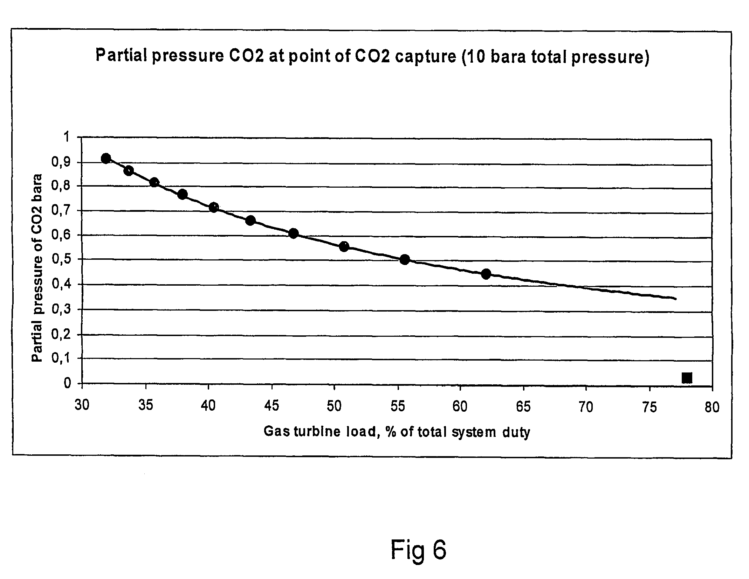

Figure 6 illustrates the partial pressure of CO₂ at the point of capture (i.e. in the exhaust gas in line 32 for the present invention, and line 12' for the comparative example). The higher the steam turbine load is, the higher is partial pressure of CO₂. The difference between CO₂ partial pressure in the present plant and the comparative example, at a low steam turbine load, is due to the higher total pressure (of about 10 bara) in the combustion gas in line 32, compared with 1 bara in line 12'. A higher partial pressure improves the CO₂ capture and enables the use of large scale commercial capture units, in addition to allowing the use of low energy absorbents, such as e.g. carbonates.

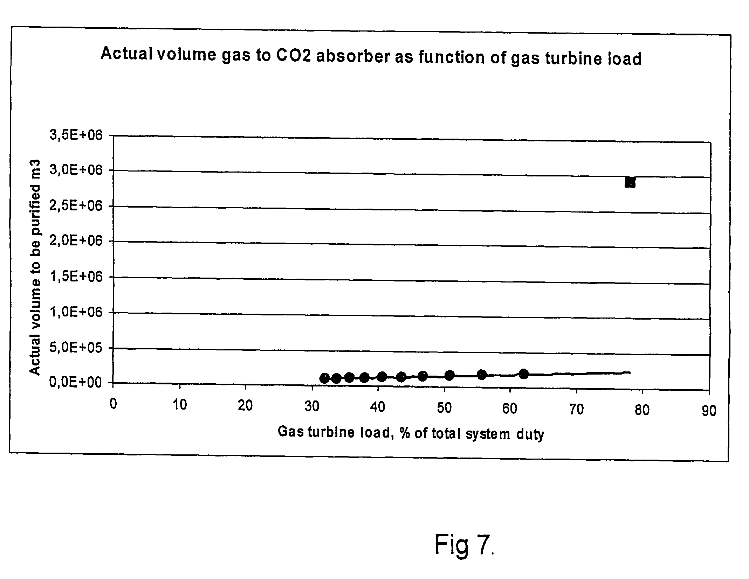

Figure 7 illustrates the total volume of exhaust gas to be purified in a plant according to the present invention and the comparative example. The difference in total volume is a result of a difference in pressure (1 bara versus 10 bara). A smaller volume means that the process equipment may be less space consuming, and makes it possible to make more compact equipment and thereby reduce the capture equipment cost.

## Claims

1. A method for separation of CO₂ from the combustion gas of a gas turbine (2, 8, 4) where carbonaceous fuel and compressed oxygen containing gas are combusted, and the combustion gas is expanded over a turbine (4) to produce electrical power in a generator (5) before the expanded combustion gas is released into the atmosphere, c h a r a c t e r i s e d i n that the method additionally comprises the steps of:
a) withdrawing the combustion gas at an intermediate stage (21) of the turbine (4),
b) introducing the withdrawn combustion gas into a burner (25)together with compressed air and additional carbonaceous fuel to cause a secondary combustion therein,
c) cooling the combustion gas from the burner (25),
d) introducing the cooled combustion gas into a CO₂ capturing unit (33, to separate the combustion gas into a CO₂ rich gas, that is withdrawn for deposition, and a CO₂ lean gas, and
e) reheating and reintroducing the CO₂ lean gas into the turbine (4) at an intermediate level (40) and further expand the gas before it is released into the atmosphere.

2. The method according to claim 1, additionally comprising the step of cooling the withdrawn combustion gas of step a) before the gas is introduced into the burner (25) in step b).

3. The method according to claim 1 or 2, wherein the combustion gas from the burner (25) is cooled by producing steam in cooling tubes (28) in a cooling chamber (24).

4. The method of claim 3, wherein the steam produced in cooling the combustion chamber (25) is expanded over a steam turbine (15) to produce electrical power.

5. The method according to any of the preceding claims, wherein CO₂ lean gas is heated by heat exchanging (30) against the combustion gas that is to be introduced into the CO₂ capturing unit (33), before the CO₂ lean gas is introduced into the turbine (4).

6. The method according to any of the preceding claims, wherein the additional carbonaceous fuel and air that are introduced into the burner (25) are regulated to give a substantially stoichiometric combustion in the burner (25).

7. The method according to any of the preceding claims, wherein the carbonaceous fuel is oil or natural gas.

8. The method according to any of the preceding claims, wherein the natural gas and air that are introduced into the burner (5) are regulated so that the mass flow of the CO₂ lean gas that is introduced to the turbine (4) at an intermediate stage is substantially equal to the mass flow of the gas that is withdrawn from the turbine at an intermediate level.

9. A plant for generation of power comprising a gas turbine (2, 8, 4), and a generator (5) operated by the gas turbine, wherein the plant additionally comprises a gas side draw unit (21) for withdrawal of partly expanded gas from an intermediate stage of the turbine (4'), a burner (25) for a secondary combustion of fuel, using the partly expanded gas and additional air as sources for oxygen, one or more heat exchanger(s) (28, 30) for cooling the combustion gas from the secondary combustion, CO₂ separation unit (33) for separation of the cooled combustion gas into a CO₂ rich gas that is treated further and exported from the plant, and a CO₂ lean gas, one or more heat exchanger(s) (30, 27) for reheating the CO₂ lean gas, and gas a gas return line (39) and a turbine inlet unit (40) for introduction of the heated CO₂ lean gas at an intermediate level of the turbine (4") for further expansion.

10. The plant according to claim 9, wherein the plant additionally comprises a cooling chamber (23) for cooling the partly expanded gas arranged between the intermediate step of the turbine 4' and the burner (25).

11. The plant according to claim 9 or 10, wherein the plant additionally comprises a heat exchanger (30) for cooling of the gas leaving the secondary combustion against the CO₂ lean gas leaving the separation unit (33), before the combustion gas is introduced into the separation unit.

12. The plant according to any of the claims 9 to 11, wherein superheater tubes (28) are provided in a secondary cooling chamber (24) for cooling of the combustion gas from the burner (25) by generation and / or superheating of steam within the tubes upstream of the separation unit (33).

13. The plant according to any of the claims 9 to 12, wherein heating tubes (22) are provided in a primary cooling chamber (23) for cooling the partly expanded gas before introduction into the burner (25), by generation of steam within the heating tubes.

14. The plant according to any of the claims 9 to 13, wherein gas heating tubes (27) are arranged in the secondary cooling chamber to heat the CO₂ lean gas leaving the heat exchanger (30) against combustion gas from the burner (25).

## Patentansprüche

1. Verfahren zur Trennung von CO₂ aus dem Verbrennungsgas einer Gasturbine (2, 8, 4), in der kohlenstoffhaltiger Treibstoff und komprimierten Sauerstoff enthaltendes Gas verbrannt werden, und das Verbrennungsgas über eine Turbine (4) expandiert wird, um elektrischen Strom in einem Generator (5) zu erzeugen, bevor das expandierte Verbrennungsgas in die Atmosphäre entlassen wird, **dadurch gekennzeichnet, dass** das Verfahren zusätzlich die folgenden Schritte umfasst:
a) Entziehen des Verbrennungsgases an einer Zwischenstufe (21) der Turbine (4),
b) Einführen des entzogenen Verbrennungsgases in einen Brenner (25) zusammen mit komprimierter Luft und zusätzlichem kohlenstoffhaltigen Treibstoff, um darin eine nachgeordnete Verbrennung zu verursachen,
c) Kühlen des Verbrennungsgases aus dem Brenner (25),
d) Einführen des gekühlten Verbrennungsgases in eine CO₂-Auffangeinheit (33), um das Verbrennungsgas in ein CO₂-reiches Gas, das zur Ablagerung entzogen wird, und ein CO₂-armes Gas zu trennen, und
e) Wiederaufheizen und Wiedereinführen des CO₂-armen Gases in die Turbine (4) an einem Zwischenniveau (40) und weiteres Expandieren des Gases, bevor es in die Atmosphäre entlassen wird.

2. Verfahren nach Anspruch 1, zusätzlich umfassend den Schritt des Kühlens des entzogenen Verbrennungsgases aus Schritt a), bevor das Gas in den Brenner (25) in Schritt b) eingeführt wird.

3. Verfahren nach Anspruch 1 oder 2, wobei das Verbrennungsgas aus dem Brenner (25) durch Herstellen von Dampf in Kühlrohren (28) in einer Kühlkammer (24) gekühlt wird.

4. Verfahren des Anspruchs 3, wobei der beim Kühlen der Verbrennungskammer (25) hergestellte Dampf über eine Dampfturbine (15) expandiert wird, um elektrischen Strom herzustellen.

5. Verfahren nach einem der vorhergehenden Ansprüche, wobei CO₂-armes Gas durch Wärmetausch (30) gegen das Verbrennungsgas aufgeheizt wird, das in die CO₂-Auffangeinheit (33) einzuführen ist, bevor das CO₂-arme Gas in die Turbine (4) eingeführt wird.

6. Verfahren nach einem der vorhergehenden Ansprüche, wobei der zusätzliche kohlenstoffhaltige Treibstoff und die Luft, die in den Brenner (25) eingeführt werden, reguliert werden, um eine im Wesentlichen stöchiometrische Verbrennung im Brenner (25) zu ergeben.

7. Verfahren nach einem der vorhergehenden Ansprüche, wobei der kohlenstoffhaltige Treibstoff Öl oder Erdgas ist.

8. Verfahren nach einem der vorhergehenden Ansprüche, wobei das Erdgas und die Luft, die in den Brenner (5) eingeführt werden, derart reguliert werden, dass der Massenfluss des CO₂-armen Gases, welches in die Turbine (4) an einer Zwischenstufe eingeführt wird, im Wesentlichen gleich dem Massenfluss des Gases ist, das aus der Turbine an einem Zwischenniveau entzogen wird.

9. Anlage zur Stromerzeugung umfassend eine Gasturbine (2, 8, 4) und einen durch die Gasturbine betriebenen Generator (5), wobei die Anlage zusätzlich eine Gasseitenzieheinheit (21) zum Entziehen von teilweise expandiertem Gas aus einer Zwischenstufe der Turbine (4'), einen Brenner (25) für eine nachgeordnete Verbrennung von Treibstoff unter der Verwendung des teilweise expandierten Gases und zusätzlicher Luft als Sauerstoffquellen, einen oder mehrere Wärmetauscher (28, 30) zum Kühlen des Verbrennungsgases aus der nachgeordneten Verbrennung, eine CO₂-Trennungseinheit (33) zum Trennen des gekühlten Verbrennungsgases in ein CO₂-reiches Gas, das weiter behandelt wird und aus der Anlage ausgeführt wird, und ein CO₂-armes Gas, einen oder mehrere Wärmetauscher (30, 27) zum Wiederaufheizen des CO₂-armen Gases und eine Gasrückleitung (39) und eine Turbineneinlasseinheit (40) zum Einführen des gewärmten CO₂-armen Gases an ein Zwischenniveau der Turbine (4'') zur weiteren Expansion umfasst.

10. Anlage nach Anspruch 9, wobei die Anlage zusätzlich eine Kühlkammer (23) zum Kühlen des teilweise expandierten Gases umfasst, welche zwischen dem Zwischenschritt der Turbine (4') und dem Brenner (25) angeordnet ist.

11. Anlage nach Anspruch 9 oder 10, wobei die Anlage zusätzlich einen Wärmetauscher (30) zum Kühlen des die nachgeordnete Verbrennung verlassenden Gases gegen das die Trennungseinheit (33) verlassende CO₂-arme Gas umfasst, bevor das Verbrennungsgas in die Trennungseinheit eingeführt wird.

12. Anlage nach einem der Ansprüche 9 bis 11, wobei Überhitzerrohre (28) in einer nachgeordneten Kühlkammer (24) zum Kühlen des Verbrennungsgases aus dem Brenner (25) durch Erzeugen und/oder Überhitzen von Dampf innerhalb der der Trennungseinheit (33) vorgeschalteten Rohre vorgesehen sind.

13. Anlage nach einem der Ansprüche 9 bis 12, wobei Heizrohre (22) in einer primären Kühlkammer (23) zum Kühlen des teilweise expandierten Gases vor dem Einführen in den Brenner (25) durch Erzeugung von Dampf innerhalb der Heizrohre vorgesehen sind.

14. Anlage nach einem der Ansprüche 9 bis 13, wobei Gasheizrohre (27) in der nachgeordneten Kühlkammer angeordnet sind, um das den Wärmetauscher (30) verlassende CO₂-arme Gas gegen Verbrennungsgas aus dem Brenner (25) aufzuheizen.

## Revendications

1. Procédé de séparation du CO₂ du gaz de combustion d'une turbine à gaz (2, 8, 4) où du combustible carboné et du gaz contenant de l'oxygène comprimé sont brûlés, et le gaz de combustion est dilaté sur une turbine (4) afin de produire de l'énergie électrique dans un générateur (5) avant que le gaz de combustion dilaté soit libéré dans l'atmosphère, **caractérisé en ce que** le procédé comprend en outre les étapes suivantes :
- a) retirer le gaz de combustion à un étage intermédiaire (21) de la turbine (4),
- b) introduire le gaz de combustion retiré dans un brûleur (25) conjointement à l'air comprimé et au carburant carboné additionnel pour provoquer une combustion secondaire à l'intérieur,
- c) refroidir le gaz de combustion en provenance du brûleur (25),
- d) introduire le gaz de combustion refroidi dans une unité de capture du CO₂ (33), afin de séparer le gaz de combustion en un gaz riche en CO₂, qui est retiré pour dépôt, et un gaz pauvre en CO₂, et
- e) chauffer à nouveau et réintroduire le gaz pauvre en CO₂ dans la turbine (4) à un niveau intermédiaire (40) et dilater encore le gaz avant qu'il soit libéré dans l'atmosphère.

2. Procédé selon la revendication 1, comprenant en outre l'étape consistant à refroidir le gaz de combustion retiré de l'étape a) avant que le gaz soit introduit dans le brûleur (25) à l'étape b).

3. Procédé selon la revendication 1 ou 2, dans lequel le gaz de combustion en provenance du brûleur (25) est refroidi en produisant de la vapeur dans des tubes de refroidissement (28) dans une chambre de refroidissement (24).

4. Procédé selon la revendication 3, dans lequel la vapeur produite en refroidissant la chambre de combustion (25) est dilatée sur une turbine à vapeur (15) pour produire de l'énergie électrique.

5. Procédé selon l'une quelconque des revendications précédentes, dans lequel le gaz pauvre en CO₂ est chauffé par échange de chaleur (30) avec le gaz de combustion qui doit être introduit dans l'unité de capture de CO₂ (33), avant que le gaz pauvre en CO₂ soit introduit dans la turbine (4).

6. Procédé selon l'une quelconque des revendications précédentes, dans lequel le carburant carboné additionnel et l'air qui sont introduits dans le brûleur (25) sont régulés pour donner une combustion sensiblement stoechiométrique dans le brûleur (25).

7. Procédé selon l'une quelconque des revendications précédentes, dans lequel le combustible carboné est du pétrole ou du gaz naturel.

8. Procédé selon l'une quelconque des revendications précédentes, dans lequel le gaz naturel et l'air qui sont introduits dans le brûleur (5) sont régulés de sorte que le flux massique du gaz pauvre en CO₂ qui est introduit dans la turbine (4) à un étage intermédiaire est sensiblement égal au flux massique du gaz qui est retiré de la turbine à un niveau intermédiaire.

9. Centrale de production d'énergie comprenant une turbine à gaz (2, 8, 4) et un générateur (5) géré par la turbine à gaz, dans laquelle la centrale comprend en outre une unité d'aspiration latérale de gaz (21) pour retirer le gaz partiellement dilaté d'un étage intermédiaire de la turbine (4'), un brûleur (25) pour une combustion secondaire de combustible, utilisant le gaz partiellement dilaté et l'air additionnel comme sources d'oxygène, un ou plusieurs échangeurs de chaleur (28, 30) permettant de refroidir le gaz de combustion de la combustion secondaire, une unité de séparation du CO₂ (33) permettant de séparer le gaz de combustion refroidi en un gaz riche en CO₂ qui est traité à nouveau et exporté de la centrale et un gaz pauvre en CO₂, un ou plusieurs échangeurs de chaleur (30, 27) permettant de chauffer à nouveau le gaz pauvre en CO₂, et une conduite de retour de gaz (39) et une unité d'admission de turbine (40) pour l'introduction du gaz pauvre en CO₂ chauffé à un niveau intermédiaire de la turbine (4") pour une dilatation supplémentaire.

10. Centrale selon la revendication 9, dans laquelle la centrale comprend en outre une chambre de refroidissement (23) permettant de refroidir le gaz partiellement dilaté agencé entre l'étape intermédiaire de la turbine (4') et le brûleur (25).

11. Centrale selon la revendication 9 ou 10, dans laquelle la centrale comprend en outre un échangeur de chaleur (30) permettant de refroidir le gaz sortant de la combustion secondaire avec le gaz pauvre en CO₂ quittant l'unité de séparation (33) avant que le gaz de combustion soit introduit dans l'unité de séparation.

12. Centrale selon l'une quelconque des revendications 9 à 11, dans laquelle des tubes de surchauffeur (28) sont disposés dans une chambre de refroidissement secondaire (24) permettant de refroidir le gaz de combustion en provenance du brûleur (25) par génération et/ou surchauffe de vapeur à l'intérieur des tubes en amont de l'unité de séparation (33).

13. Centrale selon l'une quelconque des revendications 9 à 12, dans laquelle des tubes de chauffe (22) sont disposés dans une chambre de refroidissement primaire (23) permettant de refroidir le gaz partiellement dilaté avant introduction dans le brûleur (25), par génération de vapeur à l'intérieur des tubes de chauffe.

14. Centrale selon l'une quelconque des revendications 9 à 13, dans laquelle les tubes de chauffe de gaz (27) sont agencés dans la chambre de refroidissement secondaire afin de chauffer le gaz pauvre en CO₂ quittant l'échangeur de chaleur (330) avec un gaz de combustion en provenance du brûleur (25).
